# EUROPÄISCHE PATENTANMELDUNG

(11) **EP 2 952 982 A2**
(43) Veröffentlichungstag der Anmeldung: **09.12.2015**
(21) Anmeldenummer: 15166861.3
(22) Anmeldetag: 08.05.2015
(51) Int. Cl.: G05B 15/02

(54) **STEUERGERÄT, HEIZUNGSANLAGE, HEIZUNGSANLAGENVERBUND SOWIE VERFAHREN ZUM BETRIEB SOLCH EINES STEUERGERÄTS**

(30) Priorität: 28.05.2014 DE 102014210153
(71) Anmelder: ROBERT BOSCH GMBH, 70442 Stuttgart (DE)
(72) Erfinder: Hoenig, Mark, 35435 Krofdorf-Gleiberg (DE); Kremer, Steffen, 65552 Limburg (DE); Martin, Marko, 35457 Lollar (DE)

(57) **Zusammenfassung**

Die Erfindung betrifft ein Steuergerät, eine Heizungsanlage, einen Heizungsanlagenverbund sowie ein Verfahren zum Betrieb eines Steuergeräts, wobei das eine Steuereinrichtung und eine mit der Steuereinrichtung verbunden Schnittstelle umfasst, wobei die Schnittstelle einen Eingang und einen Ausgang umfasst, wobei der Eingang mit wenigstens einer Datenbereitstellungseinrichtung einer weiteren Heizungsanlage oder eines Zentralrechners verbindbar ist, wobei der Ausgang mit einer Heizeinrichtung der Heizungsanlage verbindbar ist, wobei der Eingang ausgebildet ist, ein Datensignal mit einer Information der Datenbereitstellungseinrichtung zu erfassen und der Steuereinrichtung bereitzustellen, wobei die Steuereinrichtung ausgebildet ist, auf Grundlage des Datensignals ein Steuersignal zur Steuerung der Heizeinrichtung am Ausgang bereitzustellen.

## Beschreibung

Die Erfindung betrifft ein Steuergerät gemäß Patentanspruch 1, eine Heizungsanlage gemäß Patentanspruch 4, einen Heizungsanlagenverbund gemäß Patentanspruch 5 sowie ein Verfahren zum Betrieb eines Steuergeräts gemäß Patentanspruch 9.

### Stand der Technik

Es sind Heizungsanlagen mit einem Steuergerät und einer Heizeinrichtung bekannt. Die Heizeinrichtung kann beispielsweise eine Wärmepumpe, ein Ölbrenner und eine Gastherme oder ein Pelletofen sein. Das Steuergerät weist einen Speicher auf, in dem ein vordefinierter Parameter abgelegt ist. Die Steuereinrichtung steuert die Heizeinrichtung in Abhängigkeit des vordefinierten Parameters.

Es ist Aufgabe der Erfindung, ein verbessertes Steuergerät, eine verbesserte Heizungsanlage, einen verbesserten Heizungsanlagenverbund sowie ein verbessertes Verfahren zum Betrieb eines Steuergeräts bereitzustellen.

### Offenbarung der Erfindung

Diese Aufgabe wird mittels eines Steuergeräts gemäß Patentanspruch 1 gelöst. Vorteilhafte Ausführungsformen sind in den abhängigen Ansprüchen angegeben.

Erfindungsgemäß wurde erkannt, dass ein verbessertes Steuergerät für eine Heizungsanlage dadurch bereitgestellt werden kann, dass das Steuergerät eine Steuereinrichtung und eine mit der Steuereinrichtung verbundene Schnittstelle aufweist. Die Schnittstelle umfasst einen Eingang und einen Ausgang. Der Eingang ist mit wenigstens einer Datenbereitstellungseinrichtung verbindbar. Der Ausgang ist mit einer Heizeinrichtung der Heizungsanlage verbindbar. Der Eingang ist ausgebildet, ein Datensignal mit einer Information der Datenbereitstellungseinrichtung zu erfassen und der Steuereinrichtung bereitzustellen. Die Steuereinrichtung ist ausgebildet, auf Grundlage des Datensignals ein Steuersignal zur Steuerung der Heizeinrichtung am Ausgang bereitzustellen. Durch die Verarbeitung von Informationen der Datenbereitstellungseinrichtung kann ein Informationsdefizit des Steuergeräts, beispielsweise das Fehlen von Information über eine Außentemperatur durch einen nicht vorhandenen Außentemperatursensor, ausgeglichen werden. Dadurch kann zum einen das Steuergerät der Heizungsanlage besonders kostengünstig zum anderen auf einfache Weise auch mit neuer Software betrieben werden, die eine höhere Datenbasis benötigt.

In einer weiteren Ausführungsform ist ein mit der Steuereinrichtung verbundener Speicher vorgesehen. In dem Speicher ist ein vordefinierter Parameter und ein vordefinierter Schwellenwert abgelegt. Die Steuereinrichtung ist ausgebildet, die Information des Datensignals mit dem Parameter in einem Vergleich zu vergleichen, und bei einem Abweichen um den Schwellenwert den vordefinierten Parameter auf Grundlage der Information des Datensignals zu verändern. Die Steuereinrichtung ist ausgebildet, in Abhängigkeit des veränderten Parameters das Steuersignal zur Steuerung der Heizeinrichtung am Ausgang bereitzustellen. Dadurch kann der im Speicher abgelegte Parameter auf einfache Weise an die geänderte Informationslage angepasst werden.

In einer weiteren Ausführungsform umfasst die Steuereinrichtung ein Statistikmodul, wobei das Statistikmodul ausgebildet ist, die mittels des Datensignals bereitgestellten Informationen statistisch auszuwerten und einen statistischen Parameter zu ermitteln. Die Steuereinrichtung ist ausgebildet, den statistischen Parameter im Vergleich zu berücksichtigen, vorzugsweise die Information des Datensignals durch den statistischen Parameter zu ersetzen. Dadurch kann das Steuergerät besonders gut an eine geänderte Datenlage angepasst werden.

Die Aufgabe wird aber auch durch eine Heizungsanlage gemäß Patentanspruch 4 gelöst.

Die Heizungsanlage umfasst ein Steuergerät, das wie oben beschrieben ausgebildet ist. Der Ausgang des Steuergeräts ist dabei mit einer Heizeinrichtung verbunden. Die Heizeinrichtung ist mittels des am Ausgang bereitgestellten Steuersignals steuerbar und ausgebildet, ein Wärmeträgermedium zu erwärmen.

Die Aufgabe wird aber auch durch einen Heizungsanlagenverbund gemäß Patentanspruch 5 gelöst. Vorteilhafte Ausführungsformen sind in den abhängigen Ansprüchen angegeben.

Erfindungsgemäß wurde erkannt, dass ein verbesserter Heizungsanlagenverbund dadurch bereitgestellt werden kann, dass der Heizungsanlagenverbund eine erste Heizungsanlage und wenigstens eine zweite Heizungsanlage umfasst. Die erste Heizungsanlage umfasst ein erstes Steuergerät und die zweite Heizungsanlage ein zweites Steuergerät, wobei die beiden Steuergeräte wie oben beschrieben ausgebildet sind, wobei das erste Steuergerät mittels seiner Schnittstelle mit der Schnittstelle des zweiten Steuergeräts verbunden ist, wobei das erste Steuergerät gegenüber dem zweiten Steuergerät als Datenbereitstellungseinrichtung dient, wobei die Steuereinrichtung des zweiten Steuergeräts ausgebildet ist, das Datensignal des ersten Steuergeräts zu empfangen und die mittels des Datensignals übermittelte Information bei der Ansteuerung der Heizeinrichtung der zweiten Heizungsanlage zu berücksichtigen.

Dadurch kann die Informationslage des zweiten Steuergeräts der zweiten Heizungsanlage verbessert werden, so dass die Steuerung bzw. die Regelung der zweiten Heizungsanlage insgesamt verbessert wird.

Besonders vorteilhaft ist hierbei, wenn die erste Heizungsanlage räumlich benachbart zu der zweiten Heizungsanlage angeordnet ist.

Ferner ist von Vorteil, wenn die erste Heizungsanlage einen Außentemperatursensor aufweist, der mit dem ersten Steuergerät verbunden ist. Der Außentemperatursensor ist ausgebildet, eine Außentemperatur einer Umgebung zu erfassen und ein zur Außentemperatur korrelierendes Außentemperatursignal dem ersten Steuergerät bereitzustellen. Das erste Steuergerät erfasst das Außentemperatursignal und stellt dem zweiten Steuergerät das Datensignal mit einer Information über die erfasste Außentemperatur bereit, wobei die beiden Steuergeräte in Abhängigkeit der Außentemperatur die jeweiligen Heizeinrichtungen steuern. Dadurch kann der Heizungsanlagenverbund besonders kostengünstig ausgebildet sein.

In einer weiteren Ausführungsform ist die Schnittstelle des ersten Steuergeräts mit einem Datennetzwerk verbindbar, wobei das Datennetzwerk dem ersten Steuergerät das Datensignal bereitstellt, wobei die Steuereinrichtung des ersten Steuergeräts am Ausgang das Datensignal des Datennetzwerks dem Eingang des zweiten Steuergeräts bereitstellt.

Die Aufgabe wird aber auch durch ein Verfahren gemäß Patentanspruch 9 gelöst. Vorteilhafte Ausführungsformen sind in den abhängigen Ansprüchen angegeben.

Erfindungsgemäß wurde erkannt, dass ein verbessertes Verfahren zum Betrieb eines Steuergeräts dadurch bereitgestellt werden kann, dass ein Datensignal der Datenbereitstellungseinrichtung d erfasst wird und der Steuereinrichtung bereitgestellt wird, wobei die Steuereinrichtung auf Grundlage der Information des Datensignals ein Steuersignal zur Steuerung der Heizeinrichtung bereitstellt.

Dabei ist besonders von Vorteil, wenn die Information des Datensignals mit dem vordefinierten Parameter verglichen wird und bei Abweichen um den vordefinierten Schwellenwert der vordefinierte Parameter auf Grundlage der Information des Datensignals verändert wird, wobei die Steuereinrichtung auf Grundlage des statistischen Parameters das Steuersignal zur Steuerung der Heizeinrichtung ermittelt und mittels des ermittelten Steuersignals die Heizeinrichtung steuert.

Ferner ist von Vorteil, wenn ein Außentemperatursignal eines Außentemperatursensors am Eingang des ersten Steuergeräts erfasst wird, wobei die Steuereinrichtung des ersten Steuergeräts die Information über die Außentemperatur mittels des Datensignals am Ausgang dem Zentralrechner bereitstellt, wobei der Zentralrechner in einem vordefinierten Zeitintervall das Datensignal erfasst, wobei der Zentralrechner die erfasste Außentemperatur einer vordefinierten räumlichen Gegend zuordnet, wobei der Zentralrechner die Information über die Außentemperatur an weitere der räumlichen Gegend zugeordnete Steuergeräte sendet.

Nachfolgend wird die Erfindung anhand von Figuren näher erläutert. Dabei zeigen:
- Figur 1: eine schematische Darstellung eines Heizungsanlagenverbunds gemäß einer ersten Ausführungsform;
- Figur 2: eine schematische Darstellung eines Steuergeräts einer Heizungsanlage des in Figur 1 gezeigten Heizungsanlagenverbunds;
- Figur 3: eine schematische Darstellung eines Heizungsanlagenverbunds gemäß einer zweiten Ausführungsform;
- Figur 4: eine schematische Darstellung eines Heizungsanlagenverbunds einer dritten Ausführungsform;
- Figur 5: eine schematische Darstellung eines Steuergeräts einer Heizungsanlage des in Figur 4 gezeigten Heizungsanlagenverbunds; und
- Figur 6: eine schematische Darstellung eines Heizungsanlagenverbunds einer dritten Ausführungsform;

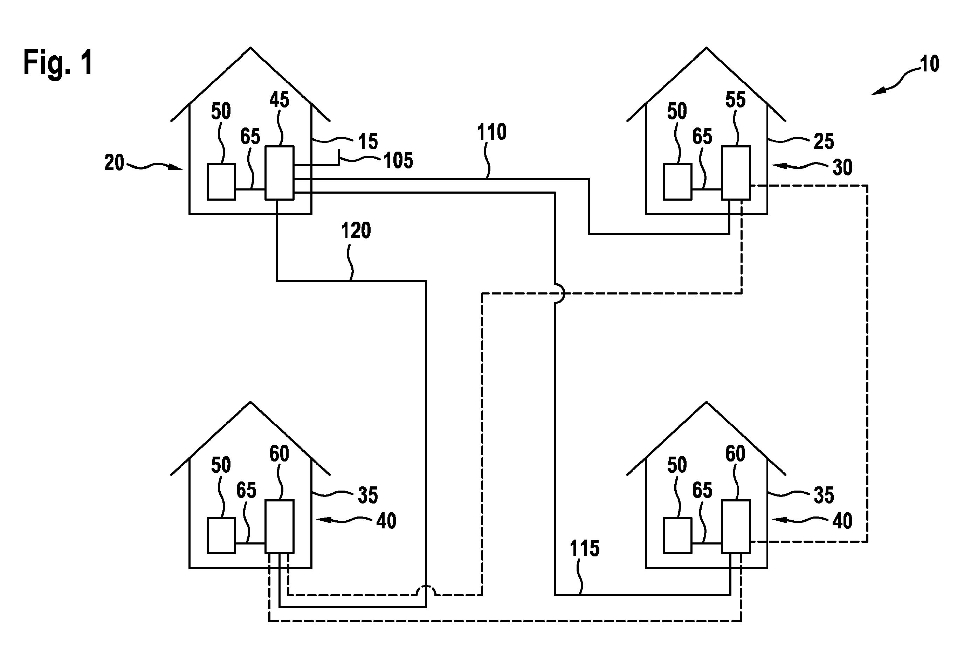

Figur 1 zeigt eine schematische Darstellung eines Heizungsanlagenverbunds 10 gemäß einer ersten Ausführungsform. Der Heizungsanlagenverbund 10 umfasst eine in einem ersten Gebäude 15 angeordnete erste Heizungsanlage 20 und eine in einem zweiten Gebäude 25 angeordnete zweite Heizungsanlage 30. Ferner sind in weiteren Gebäuden 35 weitere Heizungsanlagen 40 vorgesehen. Die Heizungsanlagen 20, 30, 40 sind in der Ausführungsform regional benachbart angeordnet. Dabei wird in der Ausführungsform unter einer regional benachbarten Anordnung beispielsweise die Anordnung im gemeinsamen Straßenzug oder Viertel eines Ortes verstanden.

Die Heizungsanlagen 20, 30, 40 weisen jeweils ein Steuergerät 45, 55, 60 und eine Heizeinrichtung 50 auf. Die Heizeinrichtung 50 kann beispielsweise als Ölbrenner, Gasbrenner, Wärmepumpe oder andersartig ausgebildet sein. Auch ist denkbar, dass die Heizeinrichtung 50 mehrere verschiedene Heizelemente umfasst, um aus unterschiedlichen Energiequellen Wärme zum Beheizen des Gebäudes und/oder Wärme zum Erwärmen eines Wärmeträgermediums, insbesondere Wasser bereitzustellen.

Die erste Heizungsanlage 20 umfasst dabei ein erstes Steuergerät 45, die zweite Heizungsanlage 30 ein zweites Steuergerät 55 und die weiteren Heizungsanlagen 40 weitere Steuergeräte 60. Die Steuergeräte 45, 55, 60 sind jeweils über eine erste Verbindung 65 mit der dem Steuergerät 45, 55, 60 zugeordneten Heizeinrichtung 50 verbunden.

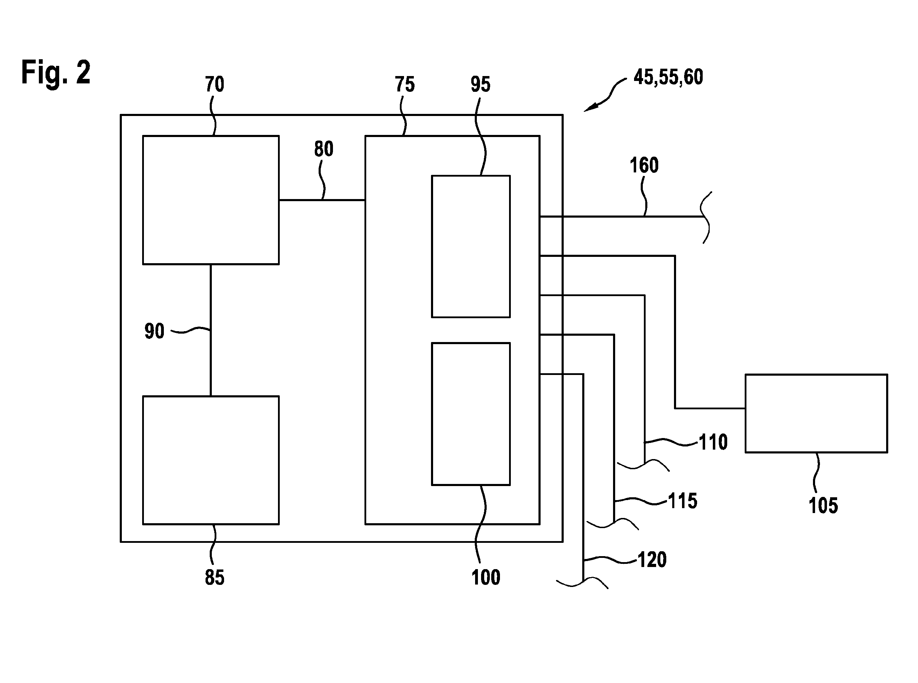

Figur 2 zeigt eine schematische Darstellung des in Figur 1 gezeigten Steuergeräts 45, 55, 60. Die in Figur 1 gezeigten Steuergeräte 45, 55, 60 der Heizungsanlagen 20, 30, 40 sind im Wesentlichen identisch zueinander ausgebildet. Dabei umfasst jedes Steuergerät 45, 55, 60 eine Steuereinrichtung 70 und eine Schnittstelle 75. Die Schnittstelle 75 ist über eine zweite Verbindung 80 mit der Steuereinrichtung 70 verbunden. Ferner umfasst jedes Steuergerät 45, 55, 60 einen Speicher 85, der über eine dritte Verbindung 90 mit der Steuereinrichtung 70 verbunden ist. Im Speicher 85 ist ein vordefinierter Parameter abgelegt. Der Parameter weist eine Zuordnung der Außentemperatur zu Steuersignalen auf. Der Parameter kann dabei wenigstens eine Kennlinie, ein Kennfeld, einen Datensatz und/oder eine tabellarische Zuordnung von Kennwerten zueinander aufweisen.

Die Schnittstelle 75 umfasst einen Eingang 95 und einen Ausgang 100. Der Ausgang 100 ist mit der Heizeinrichtung 50 der jeweiligen Heizungsanlage 20, 30, 40 verbunden.

Die Schnittstelle 75 des ersten Steuergeräts 45 ist ferner mit der Schnittstelle 75 des zweiten Steuergeräts 55 über eine vierte Verbindung 110 verbunden. Ferner ist die Schnittstelle 75 des ersten Steuergeräts 45 über eine fünfte bzw. sechste Leitung 115, 120 mit den Schnittstellen 75 der weiteren Steuergeräte 60 verbunden.

Ferner weist die erste Heizungsanlage 20 gegenüber der zweiten und den weiteren Heizungsanlagen 30, 40 einen Außentemperatursensor 105 auf. Die zweite Heizungsanlage 30 und die weiteren Heizungsanlagen 40 weisen in der Ausführungsform keinen Außentemperatursensor 105 auf. Der Außentemperatursensor 105 ist ausgebildet, eine Außentemperatur außerhalb des ersten Gebäudes 15 zu messen. Der Außentemperatursensor 105 stellt ein Außentemperatursignal, das mit einer entsprechenden Außentemperatur korreliert, bereit. Der Eingang 95 des ersten Steuergeräts 45 erfasst das Außentemperatursignal und stellt es der Steuereinrichtung 70 bereit. Die Steuereinrichtung 70 erfasst die Information des Außentemperatursignals und steuert in Abhängigkeit des Außentemperatursignals und des Parameters die Heizeinrichtung 50 der ersten Heizungsanlage 20.

Das erste Steuergerät 45 dient als Datenbereitstellungseinrichtung gegenüber dem zweiten Steuergerät 60 und den weiteren Steuergeräten 60, indem das erste Steuergerät 45 als Datensignal die Information des Außentemperatursensors 105 am Ausgang 100 dem zweiten Steuergerät 55 und den weiteren Steuergeräten 60 bereitstellt. Das zweite Steuergerät 55 und die weiteren Steuergeräte 60 erfassen das Datensignal mit der Information des Außentemperatursensors durch ihren Eingang 95 und stellen es der jeweiligen Steuereinrichtung 70 bereit. Die Steuereinrichtung 70 ist dabei ausgebildet, die Heizeinrichtung 50 in Abhängigkeit von einem im Speicher 85 abgelegten Parameter und der ermittelten Außentemperatur mittels Steuersignale zu steuern. Der Parameter kann dabei wenigstens eine Kennlinie, ein Kennfeld, einen Datensatz und/oder eine tabellarische Zuordnung von Kennwerten zueinander aufweisen.

Dies hat den Vorteil, dass Ausstattungsdefizite der zweiten Heizungsanlage 30 bzw. der weiteren Heizungsanlagen 40 durch die Vernetzung der Heizungsanlagen 20, 30, 40 durch die vierte, fünfte, sechste Verbindung 110, 115, 120 ausgeglichen werden können.

Zusätzlich ist denkbar, dass die Schnittstelle 75 des ersten Steuergeräts 45 mittels einer siebten Verbindung 160 an ein Datennetzwerk 161, insbesondere an das Internet, angeschlossen ist. Auch wird darauf hingewiesen, dass die in den Figuren 1 und 2 gezeigte vierte bis siebte Verbindung 110, 115, 120, 160 selbstverständlich drahtgeführt, aber auch drahtlos erfolgen kann. Auch ist denkbar, dass die Schnittstellen 75 der Steuergeräte 45, 55, 60 der Gebäude 15, 25, 35 (strichliert in Figur 1 dargestellt) untereinander mittels weiteren Verbindungen miteinander verbunden sind.

Die Steuereinrichtung 70 stellt Informationen aus dem Internet über den Ausgang 100 den anderen Steuergeräten 55, 60 mittels weiterer Datensignale bereit. Dies können beispielsweise Informationen über eine Vorhersage einer Außentemperatur sein. Auch ist denkbar, dass Informationen über ein Systemupgrade einer Software der Steuergeräte 55, 60 durch das erste Steuergerät 45 bereitgestellt werden. Das zweite Steuergerät 55 bzw. die weiteren Steuergeräte 60 sind ausgebildet, die durch den Ausgang 100 bereitgestellten weiteren Datensignale zu erfassen und bei der Steuerung der Heizeinrichtung 50 zu berücksichtigen. So können zusätzlich zu den Informationen des Außentemperatursensors 105 Vorhersagen über eine zukünftige Außentemperatur über die Anbindung an das Datennetzwerk durch das erste Steuergerät 45 an die weiteren Steuergeräte 55, 60 bereitgestellt werden, so dass auch diese die Information mitnutzen können.

Es wird darauf hingewiesen, dass die Steuergeräte 55, 60 nicht nur weitere Datensignale empfangen, sondern auch senden können. Das erste Steuergerät 45 übernimmt dann eine Routinefunktion gegenüber den anderen Steuergeräten 55, 60 bzw. dem Datennetzwerk.

Dadurch kann der Heizungsanlagenverbund 10 insgesamt kostengünstig ausgebildet werden bzw. fehlende Datenanbindungen der zweiten Heizungsanlage 30 bzw. der weiteren Heizungsanlagen 40 können ausgeglichen werden. Dies ist beispielsweise dann von Vorteil, wenn die zweite Heizungsanlage 30 und/oder die dritten Heizungsanlagen 40 in dem zweiten Gebäude 25 bzw. den weiteren Gebäuden 35 beispielsweise nachgerüstet wurden.

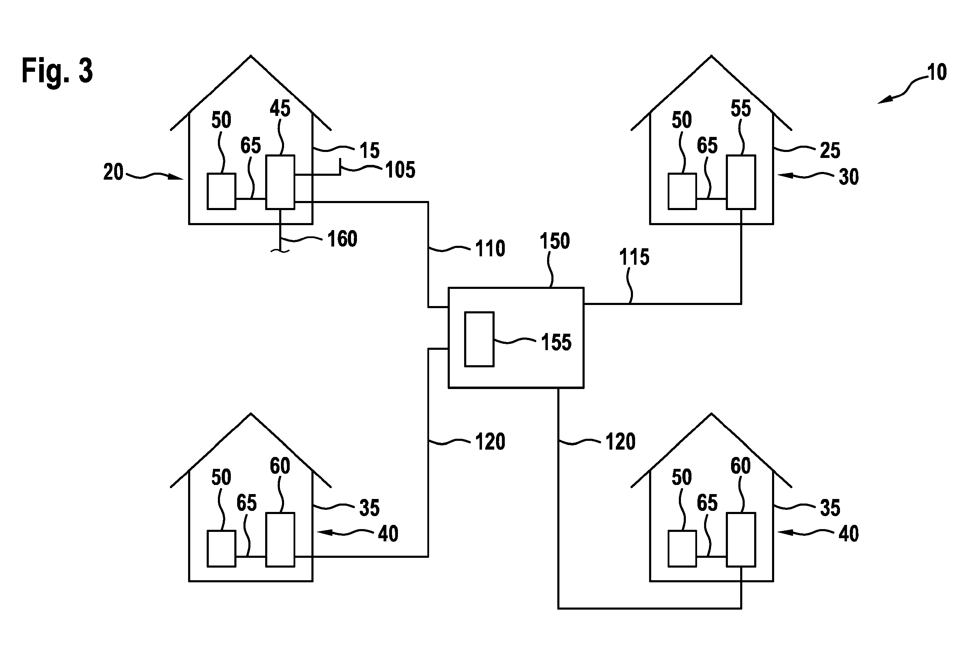

Figur 3 zeigt den in Figur 1 gezeigten Heizungsanlagenverbund 10 in einer zweiten Ausführungsform. Der Heizungsanlagenverbund 10 weist zusätzlich zu der in Figur 1 gezeigten Ausführungsform einen Zentralrechner 150 auf. Abweichend zu Figur 1 sind die Steuergeräte 45, 55, 60 nicht mehr direkt miteinander verbunden. Der Zentralrechner 150 weist eine Schnittstelle 155 auf. Das erste Steuergerät 45 ist nun über die vierte Verbindung 110 mit dem Zentralrechner 150 und das zweite Steuergerät 55 über die fünfte Verbindung 115 mit der Schnittstelle 155 des Zentralrechners 150 verbunden. Selbiges gilt auch für die weiteren Steuergeräte 60 der weiteren Gebäude 35, die nun über die sechste Verbindung 120 mit der Schnittstelle 155 des Zentralrechners 150 verbunden sind.

Dabei erfasst der Zentralrechner 150 über die Schnittstelle 155 das Außentemperatursignal des ersten Steuergeräts 45 und stellt das Außentemperatursignal über die fünfte Verbindung 115 bzw. die sechste Verbindung 120 dem zweiten Steuergerät 55 bzw. den weiteren Steuergeräten 60 zu. Die Verarbeitung des Außentemperatursignals erfolgt analog zu Figur 1 durch die Steuergeräte 55, 60.

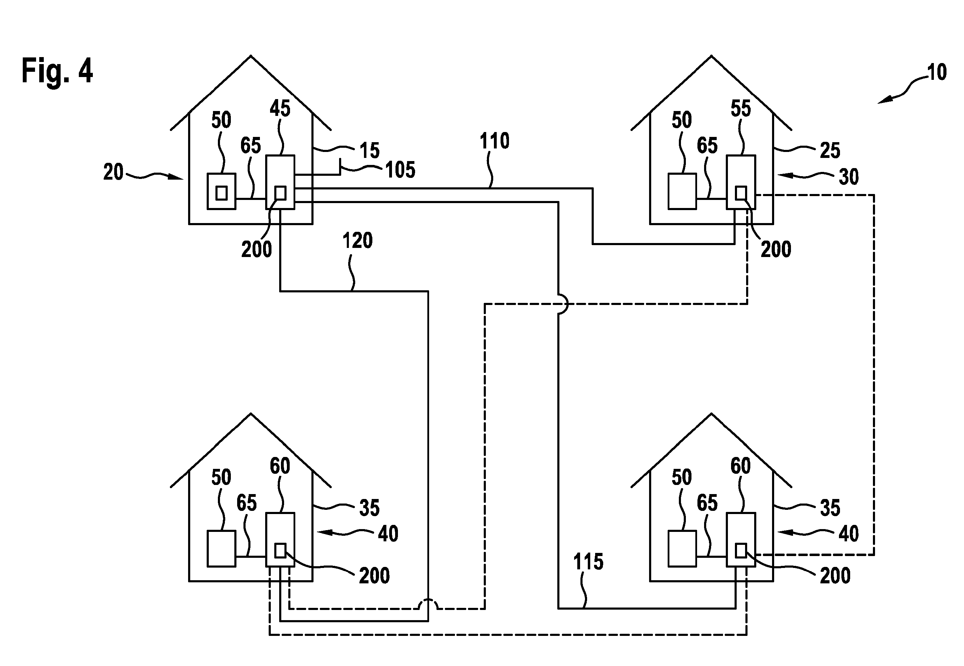

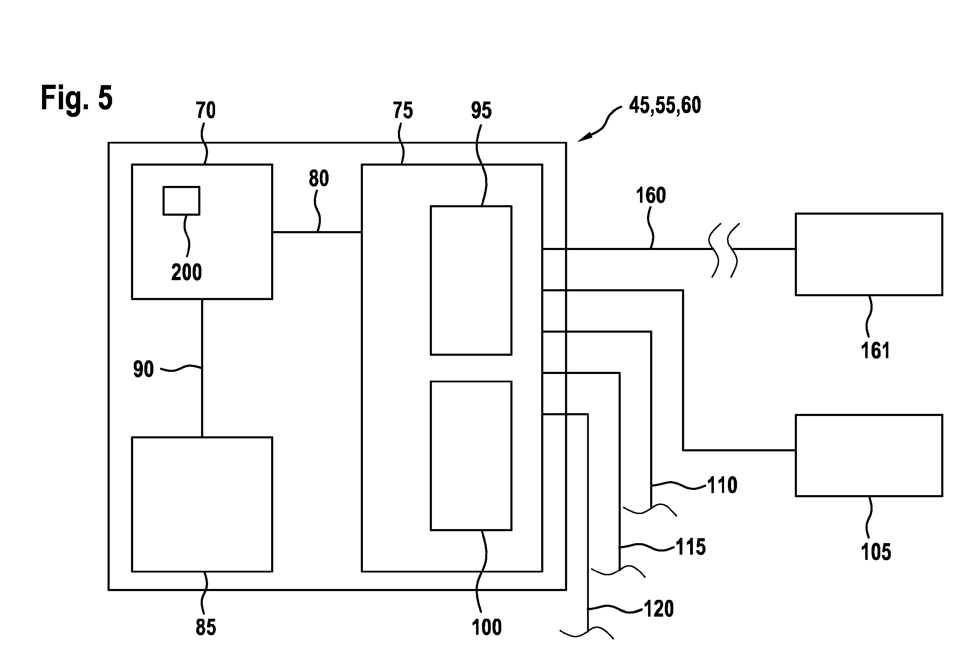

Figur 4 zeigt eine schematische Darstellung eines Heizungsanlagenverbunds 10 gemäß einer dritten Ausführungsform. Figur 5 zeigt eine schematische Darstellung des in den Figuren 4 gezeigten Steuergeräts 45, 55, 60. Der Heizungsanlagenverbund 10 bzw. das Steuergerät 45, 55, 60 ist im Wesentlichen identisch zu dem in Figur 1 und 2 gezeigten Heizungsanlagenverbund 10 ausgebildet. Zusätzlich weist jede der Steuereinrichtungen 70 der Steuergeräte 45, 55, 60 ein Statistikmodul 200 auf.

Jede der Steuereinrichtungen 70 stellt den Parameter des jeweiligen Steuergeräts 45, 55, 60 über den Ausgang 100 den anderen Steuergeräten 45, 55, 60 mittels eines Datensignals bereit. So stellt beispielsweise das erste Steuergerät 45 bzw. die Steuereinrichtung 70 einen ersten Parameter, anhand dessen die erste Steuereinrichtung 70 die Heizeinrichtung 50 der ersten Heizungsanlage 20 steuert, über die Verbindungen 110, 115, 120 dem zweiten Steuergerät 55 bzw. den weiteren Steuergeräten 60 bereit. Am Eingang 95 des zweiten Steuergeräts 55 bzw. des weiteren Steuergeräts 60 wird der mittels des Datensignals bereitgestellte Parameter erfasst. Analog dazu stellt das zweite Steuergerät 55 den anderen Steuergeräten 45, 60 seinen Parameter und auch die weiteren Steuergeräte 60 ihre Parameter den anderen Steuergeräten 45, 55, 60 als Datensignale bereit.

Am Eingang 95 erfasst nun beispielhaft das erste Steuergerät 45 den mittels Datensignalen übermittelten Parameter des zweiten Steuergeräts 55 und der weiteren Steuergeräte 60. Der Eingang 95 stellt die als Datensignale bereitgestellten Parameter über die zweite Verbindung 80 der Steuereinrichtung 70 bereit. Die Steuereinrichtung 70 wertet die erfassten Parameter in dem Statistikmodul 200 statistisch aus und ermittelt auf Grundlage der erfassten Parameter der Steuergeräte 55, 60 einen statistischen Parameter.

Im Speicher 85 des ersten Steuergeräts 45 ist ein für die Heizeinrichtung 50 korrelierender erster vordefinierter Schwellenwert abgelegt. Die Steuereinrichtung 70 vergleicht nun den ermittelten statistischen Parameter mit dem im Speicher 85 abgelegten Parameter. Ist eine Abweichung des im Speicher 85 vordefinierten Parameters und des ermittelten statistischen Parameters größer als ein im Speicher 85 abgelegter vordefinierter Schwellenwert, so wird in der Ausführungsform der im Speicher 85 abgelegte vordefinierte Parameter durch den statistischen Parameter ersetzt. Auch ist denkbar, dass im Speicher 85 eine Funktion hinterlegt ist, anhand der der im Speicher vordefinierte Parameter mit dem statistisch ermittelten Parameter verändert wird.

Der veränderte Parameter wird im Speicher 85 neu abgelegt. Die Steuereinrichtung 70 berücksichtigt den veränderten Parameter bei der Steuerung der Heizeinrichtung 50 und sendet ein korrespondierend zum veränderten Parameter ausgebildetes Steuersignal zur Steuerung der Heizeinrichtung 50 an die Heizeinrichtung 50.

Selbiges wird auch durch die Steuereinrichtung 70 des zweiten Steuergeräts 55 und durch das Steuergerät 60 der weiteren Heizungsanlagen 40 durchgeführt.

Um die Steuereinrichtung 70 mit Informationen nicht zu überlasten, ist die Steuereinrichtung 70 ausgebildet, ausschließlich Datensignale von Heizungsanlagen 30, 40, die lokal benachbart oder regional beabstandet zu der ersten Heizungsanlage 20 angeordnet sind, zu berücksichtigen. Dies kann beispielsweise dadurch erfolgen, dass in dem Datensignal zusätzlich eine Information eines Aufstellungsort der Heizungsanlage 20, 30, 40 enthalten ist. Die Steuereinrichtung 70 ist dabei dann ausgebildet, nur die Datensignale bei der statistischen Auswertung zu berücksichtigen, die regional benachbart sind. Zur Erfassung der regionalen Benachbarung kann im Speicher 85 ein weiterer Schwellenwert abgelegt sein, der mit einem maximalen Abstand des Steuergeräts zu weiteren Aufstellorten vor zweiten und/oder weiteren Heizanlagen 20, 30, 40 korreliert. Die Steuereinrichtung ermittelt auf Grundlage einer im Speicher 85 abgelegten Datenbank, z. B. einer topographischen Karte, den Abstand des im Datensignal übermittelten Aufstellorts zum Aufstellort der eigenen Heizanlage 20 und vergleicht den ermittelten Abstand mit dem im Speicher 85 abgelegten Abstand. Überschreitet der ermittelte Abstand den vordefinierten weiteren Schwellenwert, berücksichtigt die Steuereinrichtung 70 das Datensignal nicht bei der statistischen Auswertung mit dem Statistikmodul 200.

Durch die statistische Auswertung der Parameter durch die Statistikmodule 200 sind keine weiteren Systemupdates für die Steuergeräte 45, 55, 60 notwendig und ferner wird durch die Berücksichtigung ausschließlich benachbart angeordneter Steuergeräte 45, 55, 60 das regionsspezifische Nutzerverhalten durch den geänderten Parameter mitberücksichtigt.

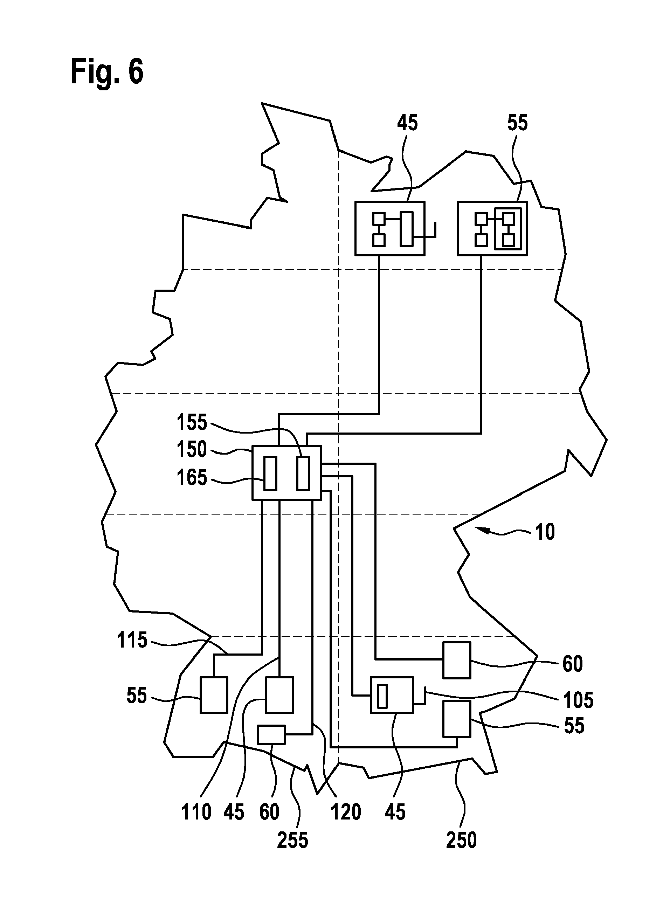

Figur 6 zeigt eine regionale schematische Anordnung von Heizungsanlagen 20, 30, 40 in dem Heizungsanlagenverbund 10. Der Heizanlagenverbund 10 ist ähnlich wie in Figur 3 beschrieben ausgebildet. Dabei ist beispielsweise ein Land oder eine Region in unterschiedliche Segmente 250, 255 eingeteilt. In Figur 6 ist zur verbesserten Übersicht nur in drei von den zahlreichen Segmenten 250, 255 eine geringe Anzahl von Steuergeräten 45, 55, 60 dargestellt. Sowohl die Ausgestaltung der Segmente 250, 255 als auch die Anzahl der verschiedenen Steuergeräte 45, 55, 60 kann andersartig sein. Die Steuergeräte 45, 55, 60 sind dabei, wie bereits beschrieben, über verschiedene Verbindungen 110, 115, 120 mit dem Zentralrechner 150 verbunden. Dabei weist in der Ausführungsform beispielhaft ausschließlich die erste Heizungsanlage 20 den Außentemperatursensor 105 auf. Der Außentemperatursensor 105 ist dabei mit dem ersten Steuergerät 45 verbunden. Die weiteren Steuergeräte 55, 60 weisen hierbei keinen Außentemperatursensor 105 auf.

Der Zentralrechner 150 weist neben der Schnittstelle 155, mit der der Zentralrechner 150 mit den verschiedenen Verbindungen 110, 115, 120 verbunden ist, einen Speicher 165 auf.

Im Folgenden wird das Zusammenspiel des Zentralrechners 150 mit den in dem ersten Segment 250 angeordneten Steuergeräten 45, 55, 60 erläutert.

Der Außentemperatursensor 105 stellt, wie oben beschrieben, das Außentemperatursignal dem Eingang 95 des ersten Steuergeräts 45 in der ersten Sektion 250 bereit. Selbiges erfolgt auch durch das erste Steuergerät 45 in der zweiten Sektion 255. Der Eingang 95 erfasst das Außentemperatursignal und leitet dies an die Steuereinrichtung 70 weiter. Die Steuereinrichtung 70 des ersten Steuergeräts 45 berücksichtigt bei der Steuerung der Heizungsanlage 20, 30, 40 auf Grundlage des im Speicher abgelegten Parameters das Außentemperatursignal und stellt ein entsprechendes Steuersignal am Ausgang 100 bereit. Zusätzlich stellt die Steuereinrichtung 70 des ersten Steuergeräts 45 im ersten Segment 250 die Information der Außentemperatur als Datensignal am Ausgang 100 bereit. Selbiges gilt auch durch das im zweiten Segment 255 angeordnete erste Steuergerät 45. Die Schnittstelle 155 des Zentralrechners 150 erfasst das durch die ersten Steuergeräte 45 bereitgestellte Datensignal und speichert die für die Segmente 250, 255 zugeordneten Informationen im Zentralspeicher 165 ab.

Auch ist denkbar, dass anstelle einer kontinuierlichen Bereitstellung des Datensignals der Zentralrechner 150 ein Abfragesignal an die Schnittstellen 155 der ersten Steuergeräte 45 sendet und die Steuereinrichtungen 70 die erfasste Außentemperatur als Antwort auf das als Abfragesignal ausgebildete Datensignal am Ausgang 100 bereitstellen. Als vordefinierte Zeit eignet sich beispielsweise eine stündliche Abfrage der Außentemperatur. Der Zentralrechner 150 ordnet die durch die Steuergeräte 45 aus den einzelnen Segmenten 250, 255 bereitgestellten Datensignale jeweils der entsprechenden Sektion 250, 255 zu. Der Zentralrechner 150 stellt in einem vordefinierten Zeitintervall den zweiten Steuergeräten 55 bzw. den weiteren Steuergeräten 60 der ersten Sektion 250 über die Zentralrechnerschnittstelle 155 das Datensignal bereit. Dieses wird durch die Eingänge 95 des zweiten Steuergeräts 55 bzw. der weiteren Steuergeräte 60 erfasst und der Steuereinrichtung 70 bereitgestellt. Die Steuereinrichtung 70 des zweiten Steuergeräts 55 bzw. des weiteren Steuergeräts 60 kann dann das Datensignal bei der weiteren Ansteuerung der Heizungsanlage 20, 30, 40 an das zweite Steuergerät 55 angeschlossenen Heizeinrichtung 50 bzw. der an das weitere Steuergeräte 60 angeschlossenen Heizeinrichtungen 50 berücksichtigen. Dies hat den Vorteil, dass für die Sektion angeordnete Heizungsanlagen 20, 30, 40 die jeweiligen notwendigen Informationen zur Steuerung der Heizeinrichtungen 50 bereitgestellt werden können und gleichzeitig Ausstattungsdefizite der zweiten Heizungsanlage 30 bzw. der weiteren Heizungsanlagen 40 ausgeglichen werden können.

Das gleiche Vorgehen erfolgt auch für die zweite Sektion 255. Abweichend dazu wird jedoch die in der zweiten Sektion 255 erfasste Außentemperatur des ersten Steuergeräts 45 an den Zentralrechner 150 übermittelt und den in der zweiten Sektion 255 angeordneten zweiten Steuergerät 55 bzw. weiteren Steuergeräten 60 vom Zentralrechner 150 bereitgestellt.

Ferner hat diese Ausgestaltung den Vorteil, dass die Abfragekosten für den Zentralrechner 150 und die zu speichernden Informationen reduziert werden, sodass insgesamt der Betrieb des Heizungsanlagenverbunds 10 kostengünstiger ist.

## Patentansprüche

1. Steuergerät (45, 55, 60) für eine Heizungsanlage (20)
- mit einer Steuereinrichtung (70) und einer mit der Steuereinrichtung (70) verbunden Schnittstelle (75),
- wobei die Schnittstelle (75) einen Eingang (95) und einen Ausgang (100) umfasst,
- wobei der Eingang (95) mit wenigstens einer Datenbereitstellungseinrichtung (45, 55, 60,150) verbindbar ist,
- wobei der Ausgang (100) mit einer Heizeinrichtung (50) der Heizungsanlage (20) verbindbar ist,
- wobei der Eingang (95) ausgebildet ist, ein Datensignal mit einer Information der Datenbereitstellungseinrichtung (45, 55, 60, 150) zu erfassen und der Steuereinrichtung (70) bereitzustellen,
- wobei die Steuereinrichtung (70) ausgebildet ist, auf Grundlage des Datensignals ein Steuersignal zur Steuerung der Heizeinrichtung (50) am Ausgang (100) bereitzustellen.

2. Steuergerät (45, 55, 60) nach Anspruch 1,
- wobei ein mit der Steuereinrichtung (70) verbundener Speicher (85) vorgesehen ist,
- wobei in dem Speicher (85) ein vordefinierter Parameter und ein vordefinierter Schwellenwert abgelegt ist,
- wobei die Steuereinrichtung (70) ausgebildet ist, die Information des Datensignals mit dem Parameter in einen Vergleich zu vergleichen und bei Abweichen um den Schwellenwert den vordefinierten Parameter auf Grundlage der Information des Datensignals zu verändern,
- wobei die Steuereinrichtung (70) ausgebildet ist, in Abhängigkeit des veränderten Parameters das Steuersignal zur Steuerung der Heizeinrichtung (50) am Ausgang (100) bereitzustellen.

3. Steuergerät (45, 55 60) nach Anspruch 2,
- wobei die Steuereinrichtung (70) ein Statistikmodul (200) umfasst, wobei das Statistikmodul (200) ausgebildet ist, die mittels des Datensignals bereitgestellten Information statistisch auszuwerten und einen statistischen Parameter zu ermitteln,
- wobei die Steuereinrichtung (70) ausgebildet ist, den statistischen Parameter im Vergleich zu berücksichtigen, vorzugsweise die Information des Datensignals durch den statistischen Parameter zu ersetzen.

4. Heizungsanlage (20, 30, 40) mit einem Steuergerät (45, 55, 60) nach einem der Ansprüche 1 bis 3,
- wobei der Ausgang (100) des Steuergeräts (45, 55, 60) mit einer Heizeinrichtung (50) verbunden ist,
- wobei die Heizeinrichtung (50) mittels des am Ausgang (100) bereitgestellten Steuersignals steuerbar ist,
- wobei die Heizeinrichtung (50) ausgebildet ist, ein Wärmeträgermedium zu erwärmen.

5. Heizungsanlagenverbund (10) mit einer ersten Heizungsanlage (20) und wenigstens einer zweiten Heizungsanlage (20, 30, 40),
- wobei die erste Heizungsanlage (20) ein erstes Steuergerät (45) und die zweite Heizungsanlage (30, 40) ein zweites Steuergerät (55, 60) aufweist,
- wobei die beiden Steuergeräte (45, 55, 60) nach einem der Ansprüche 1 bis 3 ausgebildet sind,
- wobei die das erste Steuergerät (45) mittels ihrer Schnittstelle (75) mit der Schnittstelle (75) des zweiten Steuergeräts (55, 60) verbunden ist,
- wobei das erste Steuergerät (45) gegenüber dem zweiten Steuergerät (55, 60) als Datenbereitstellungseinrichtung dient,
- wobei die Steuereinrichtung (70) des zweiten Steuergeräts (55, 60) ausgebildet ist, das Datensignal des ersten Steuergeräts (45) zu empfangen und die mittels des Datensignals übermittelte Information bei der bei der Ansteuerung der Heizeinrichtung (50) der zweiten Heizungsanlage (30, 40) zu berücksichtigen.

6. Heizungsanlagenverbund (10) nach Anspruch 5, wobei die erste Heizungsanlage (20) räumlich benachbart zu der zweiten Heizungsanlage (30, 40) angeordnet ist.

7. Heizungsanlagenverbund (10) nach Anspruch 5 oder 6, wobei
- die erste Heizungsanlage (20) einen Außentemperatursensor aufweist, der mit dem ersten Steuereingerät (45) verbunden ist,
- wobei der Außentemperatursensor ausgebildet ist, eine Außentemperatur einer Umgebung zu erfassen und ein zur Außentemperatur korrelierendes Außentemperatursignal dem ersten Steuergerät (45) bereitzustellen,
- wobei das Steuergerät (45) der ersten Heizungsanlage (20) das Außentemperatursignal erfasst und dem zweiten Steuergerät (55, 60) das Datensignal mit einer Information über die erfasste Außentemperatur bereitstellt, wobei die beiden Steuergeräte (45, 55, 60) in Abhängigkeit der Außentemperatur die jeweiligen Heizeinrichtungen (50) steuern.

8. Heizungsanlagenverbund (10) nach einem der Ansprüche 5 bis 7,
- wobei die Schnittstelle des ersten Steuergeräts (45) mit einem Datennetzwerk (161) verbindbar ist,
- wobei das Datennetzwerk dem ersten Steuergerät (45) das Datensignal bereitstellt,
- wobei die Steuereinrichtung (60) des ersten Steuergeräts (45) am Ausgang (100) das Datensignal des Datennetzwerks (161) dem Eingang (95) des zweiten Steuergeräts (55, 60) bereitstellt.

9. Verfahren zum Betrieb eines Steuergeräts (45, 55, 60) nach einem der Ansprüche 1 bis 3 für eine Heizungsanlage (20, 30, 40) nach Anspruch 4,
- wobei ein Datensignal der Datenbereitstellungseinrichtung (45, 55, 60, 150) erfasst wird und der Steuereinrichtung (70) bereitgestellt wird,
- wobei die Steuereinrichtung (70) auf Grundlage der Information des Datensignals ein Steuersignal zur Steuerung der Heizeinrichtung (50) bereitstellt.

10. Verfahren nach Anspruch 9,
- wobei die Information des Datensignals mit dem vordefinierten Parameter verglichen wird und bei Abweichen um den vordefinierten Schwellenwert der vordefinierte Parameter auf Grundlage der Information des Datensignals verändert wird,
- wobei in Abhängigkeit des veränderten Parameters die Heizeinrichtung (50) gesteuert wird.

11. Verfahren nach Anspruch 9 oder 10,
- wobei die Informationen des Datensignals statistisch zur Ermittlung des statistischen Parameter ausgewertet werden,
- wobei der ermittelte statistische Parameter mit dem im Speicher (85) abgelegten vordefinierten Parameter verglichen wird und bei einem Abweichen um den im Speicher (85) abgelegten vordefinierten Schwellenwert, der vordefinierte im Speicher (85) abgelegte Parameter durch den ermittelten statistischen Parameter im Speicher (85) ersetzt wird,
- wobei die Steuereinrichtung (70) auf Grundlage des statistischen Parameters das Steuersignal zur Steuerung der Heizeinrichtung (50) ermittelt und mittels des ermittelten Steuersignals die Heizeinrichtung (50) steuert.

12. Verfahren nach einem der Ansprüche 9 bis 11,
- wobei ein Außentemperatursignal eines Außentemperatursensors am Eingang des ersten Steuergeräts (45) erfasst wird,
- wobei die Steuereinrichtung (70) des ersten Steuergeräts (45) die Information über die Außentemperatur mittels des Datensignals am Ausgang (100) dem Zentralrechner (150) bereitstellt.
- wobei der Zentralrechner (150) in einem vordefinierten Zeitintervall das Datensignal erfasst,
- wobei der Zentralrechner (150) die erfasste Außentemperatur einer vordefinierten räumlichen Gegend zuordnet,
- wobei der Zentralrechner (150) die Information über die Außentemperatur an weitere der räumlichen Gegend zugeordnete Steuergeräte (55, 60) sendet.
